# DEMANDE DE BREVET EUROPEEN

(11) **EP 2 980 631 A1**
(43) Date de publication de la demande: **03.02.2016**
(21) Numéro de dépôt: 15178275.2
(22) Date de dépôt: 24.07.2015
(51) Int. Cl.: G02C 5/22

(54) **CHARNIÈRE SANS VIS DE PIVOT POUR MONTURE DE LUNETTES**

(30) Priorité: 01.08.2014 FR 1457536
(71) Demandeur: Kuntz, Christophe, 75011 Paris (FR)
(72) Inventeur: Kuntz, Christophe, 75011 Paris (FR)
(74) Mandataire: Casalonga

(57) **Abrégé**

Une charnière (1) sans vis de pivot pour monture de lunettes comprenant un premier élément (2) destiné à être monté sur une branche d'une monture de lunettes et un second élément (3) destiné à être monté sur la face de ladite monture, le premier élément (2) étant imbriqué dans le second élément (3) de manière à former une charnière articulée entre une première position dans laquelle la branche de la monture est en position ouverte permettant le port des lunettes par un utilisateur et une seconde position dans laquelle la branche est escamotée en position fermée contre la face de la monture.

Le second élément (3) comprend deux orifices (41, 42) dans lesquels le premier élément (2) est inséré de manière à former au moins un point de croisement (51 à 56) dans chaque orifice (41, 42) dans la première position et dans la seconde position.

## Description

La présente invention concerne les montures pour lunettes, et plus particulièrement une charnière sans vis pour la fabrication des montures de lunettes.

Une paire de lunettes est constituée d'une monture sur laquelle sont montés des verres. La monture est une armature composée d'une face et de deux branches. La face de la monture permet de recevoir et de maintenir les verres, tandis que les branches, posées sur les oreilles, assurent la stabilité des lunettes.

Chacune des deux branches est assemblée à l'une des deux extrémités de la face à l'aide d'une charnière. La charnière permet, d'une part, de replier la branche contre la face pour réduire l'encombrement de la paire de lunettes avant de la ranger dans un boîtier, et d'autre part, de déplier la branche dans une position dans laquelle la branche peut être posée sur une oreille d'un utilisateur.

Il existe de très nombreux types de charnière utilisés pour assembler les branches d'une monture à la face. Le plus souvent, l'assemblage est réalisé à l'aide d'une charnière à vis formant pivot, c'est-à-dire une charnière utilisant une vis autour de laquelle la charnière pivote.

Les charnières comportant une vis formant pivot présentent des inconvénients. Lorsque la vis est trop serrée, la charnière est difficile à actionner. Lorsque la vis n'est pas assez serrée, en revanche, la vis peut facilement se détacher.

Par ailleurs avec une vis de pivot, il n'est pas possible de verrouiller une branche dans une position, que ce soit dans la position dépliée ou dans la position repliée. En effet, en général, le blocage en position dépliée est réalisé mécaniquement par une portion de la branche en butée contre une portion de la face, et le blocage en position repliée est réalisé par la branche en butée contre la face.

Il est connu du document DE 298 06 448 une charnière sans vis comprenant un élément fixé sur la face d'une monture de manière à former un orifice de réception d'une branche de monture, la branche comprenant une extrémité en forme de spirale. L'extrémité en spirale est insérée dans l'orifice de l'élément de la face pour former la charnière.

Une telle charnière ne présente pas une bonne stabilité verticale, de part le fait que la spirale de la branche ne passe au travers que d'un seul orifice.

Il est également connu du document EP 1 754 097 une charnière sans vis de pivot comprenant un premier élément ayant une extrémité en forme de spirale, un deuxième élément formant un orifice de passage et une paroi d'appui pour l'extrémité en spirale du premier élément, et un troisième élément permettant de verrouiller le second élément, qui est formé par un assemblage de deux parties distinctes, et de former une rainure de réception de l'extrémité en spirale du premier élément.

La charnière sans vis décrite dans ce document ne présente qu'un point de croisement entre le premier élément et le second élément, le premier élément ne traversant le deuxième élément qu'à un seul endroit. Par conséquent, la branche ne présente pas un très bon verrouillage vertical de la branche par rapport à la face de la monture sans le troisième élément de la charnière.

Il est également connu du document EP 0 863 424 une branche de monture de lunettes comportant une charnière sans vis. La charnière comprend deux fentes ouvertes à une de leurs extrémités permettant de définir trois bandes métalliques possédant chacune une extrémité libre, la bande comprise entre les deux bandes périphériques s'écartant du plan comprenant les deux bandes périphériques lorsque la branche est repliée.

L'invention a pour objectif de fournir une charnière améliorée sans vis de pivot, utilisable pour assembler une branche à une face d'une monture d'une paire de lunettes et permettant de présenter un bon verrouillage vertical tout en utilisant seulement deux éléments.

L'invention a ainsi pour objet, une charnière sans vis de pivot pour monture de lunettes comprenant un premier élément destiné à être monté sur une branche d'une monture de lunettes et un second élément destiné à être monté sur la face de ladite monture, le premier élément étant imbriqué dans le second élément de manière à former une charnière articulée entre une première position dans laquelle la branche de la monture est en position ouverte permettant le port des lunettes et une seconde position dans laquelle la branche est escamotée en position fermée contre la face de la monture.

Selon une caractéristique générale de l'invention, le second élément comprend deux orifices dans lesquels le premier élément est inséré de manière à former au moins un point de croisement dans chaque orifice dans la première position et dans la seconde position.

La formation de deux points de croisement distants, chacun dans un orifice, par les premier et second éléments permettent d'assurer un bon verrouillage de la charnière dans un plan vertical sans recours à un élément supplémentaire. On entend par plan vertical, un plan perpendiculaire au plan dans lequel la charnière, et notamment son premier élément, se déplace de la première position à la seconde position.

De préférence, le premier élément comprend une bande d'extrémité recourbée de manière à délimiter une ouverture d'insertion d'une portion du second élément.

La bande recourbée peut être réalisée sous une forme arrondie de crochet ou bien à l'aide d'au moins trois portions droites solidaires formant une forme générale en U. L'extrémité recourbée de la bande permet de maintenir le verrouillage dans les deux positions de la charnière.

Le second élément comprend préférentiellement une bande dont une première extrémité est destinée à être montée sur la face de la monture et une seconde extrémité possède une forme de spirale, la seconde extrémité de la bande comportant les deux orifices dans lesquels est inséré le premier élément.

De préférence, l'extrémité recourbée du premier élément et la seconde extrémité en spirale du second élément sont configurées pour fournir un effet ressort à la charnière, c'est-à-dire former un ressort interne à la charnière, lorsque la charnière est dans une position entre la première position et la seconde position de manière à ramener la charnière dans la première position ou la seconde position.

L'effet ressort fourni par la charnière permet ainsi de faciliter le changement de position des branches de la monture utilisant lesdites charnières. L'effet ressort permet également de s'assurer que la charnière ne soit bloquée que dans la première ou la seconde position.

Dans un mode de réalisation de l'invention où le second élément comprend deux orifices réalisés sur son extrémité en spirale, le premier orifice étant réalisé sur une portion plus à l'extérieur de la spirale que le second orifice, une configuration possible de la charnière pour fournir l'effet ressort consiste à dimensionner le premier élément de sorte que la largeur maximale de son extrémité recourbée soit, d'une part, strictement inférieure à la longueur du segment de droite le plus grand séparant l'extrémité du second orifice la plus à l'intérieure de la spirale de la portion de spirale séparant les deux orifices, et soit, d'autre part, supérieure à la longueur du segment de droite séparant les deux extrémités du second orifice.

La larguer maximale de la partie recourbée du premier élément correspond à la largeur maximale de l'ouverture formée par la partie recourbée, c'est-à-dire la largeur maximale de l'espace à l'intérieur de la partie recourbée, la largeur étant mesurée dans une direction comprise dans le plan dans lequel s'étend le premier élément entre ses deux extrémités et orthogonale à la direction dans laquelle s'étend l'extrémité non recourbée du premier élément.

De préférence, chaque orifice forme une fente dont l'épaisseur est supérieure à la largeur de la portion de la bande du premier élément insérée dans les orifices.

L'épaisseur de la fente est suffisante pour permettre au premier élément de se déplacer horizontalement à l'intérieur des fentes du second élément pour permettre à la charnière de pivoter, mais suffisamment mince pour maintenir verticalement le premier élément par rapport au second élément.

Les orifices peuvent avantageusement être dimensionnés pour permettre un pivotement du premier élément par rapport au second élément uniquement entre la première position et la seconde position.

Les dimensions longitudinales des orifices permettent ainsi de définir l'angle maximal sur lequel la charnière peut pivoter. Les dimensions longitudinales définissent ainsi la première position et la seconde position, tout en assurant le verrouillage dans la première position ou dans la seconde position, la charnière ne pouvant pivoter qu'entre les deux positions et uniquement sur une plage angulaire donnée.

Les premier et second éléments peuvent être formés dans un même matériau métallique.

Le matériau métallique utilisé peut être par exemple de l'inox ou du titane. Le métal présente une résistance importante pour une épaisseur réduite, et un poids relativement réduit.

Le premier élément peut comprendre une seconde extrémité comportant un orifice pour fixer le premier élément à ladite branche de la monture.

En variante, le premier élément peut être réalisé en une seule pièce avec une branche de la monture destinée à comporter ladite charnière.

Le premier élément peut également comprendre un orifice dans la seconde extrémité réalisé de manière à venir y insérer l'extrémité libre de la partie recourbée et verrouiller ainsi le premier élément dans le second élément.

Le second élément peut être réalisé en une seule pièce avec la face de la monture destinée à comporter ladite charnière.

Selon un autre aspect de l'invention, il est proposé une monture de lunettes comprenant au moins une charnière sans vis telle que définie ci-dessus.

D'autres avantages et caractéristiques de l'invention apparaîtront à l'examen de la description détaillée d'un mode de réalisation de l'invention, nullement limitatif, et des dessins annexés, sur lesquels :
- la figure 1 illustre une vue en perspective d'une charnière selon un mode de réalisation de l'invention montrant le premier élément et le second élément ;
- la figure 2 représente une vue en perspective d'une charnière assemblée dans une première position ;
- la figure 3 est une vue de dessus de la charnière de la figure 2 ;
- la figure 4 représente une vue en perspective d'une charnière assemblée dans une seconde position ;
- la figure 5 présente une vue de dessus de la charnière de la figure 4.

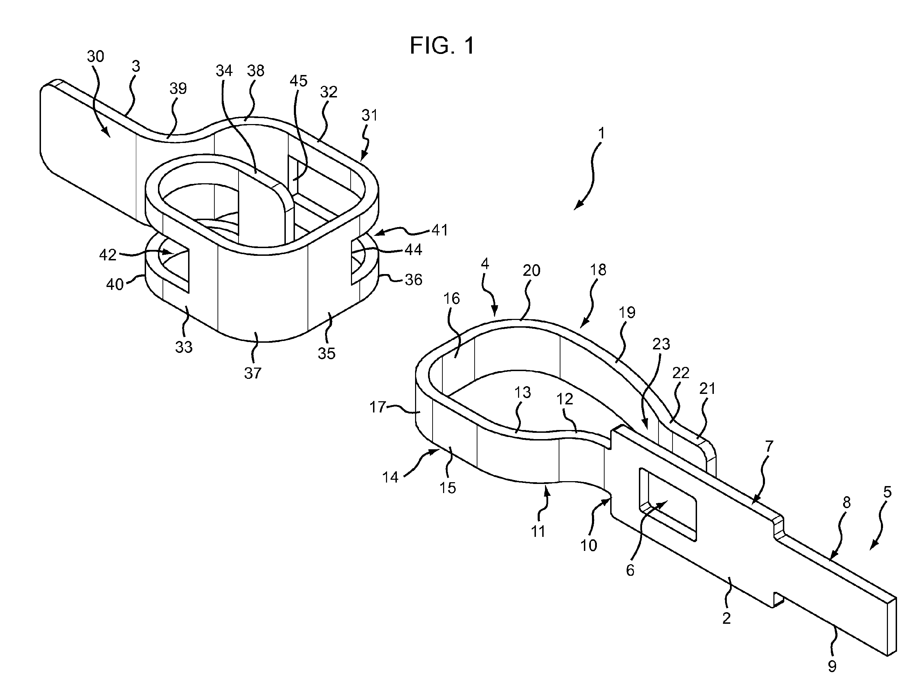

Sur la figure 1 est illustrée une vue en perspective d'une charnière 1 désassemblée selon un mode de réalisation de l'invention.

La charnière 1 comprend un premier élément 2 et un second élément 3 distincts et destinés à être imbriqués l'un dans l'autre pour former la charnière 1.

Le premier élément 2 comprend une bande recourbée à une première extrémité 4 et, à une seconde extrémité 5, une portion droite. La bande recourbée possède une épaisseur constante sur toute sa longueur.

La seconde extrémité 5 comprend un orifice 6 permettant la fixation du premier élément 2 sur une branche d'une monture de lunettes. Dans le mode de réalisation illustré, la seconde extrémité 5 comprend une portion 7 de bande plus large sur une zone périphérique à l'orifice 6 de manière à renforcer la bande au niveau de la fixation avec la branche. La portion 7 de bande plus large définit ainsi une marche avec une portion 8 s'étendant depuis la portion 7 de bande plus large jusqu'à l'extrémité libre 9 de la seconde extrémité 5.

La seconde extrémité 5 comprend en outre une seconde extrémité 10, opposée à son extrémité libre 9, solidaire de la première extrémité 4 recourbée.

La première extrémité 4 comprend une première partie 11 s'étendant depuis l'extrémité 10 de la seconde extrémité 5. La première partie 11 de la première extrémité 4 comporte deux portions courbes 12 et 13 à concavité opposée de manière former un S et à définir un point d'inflexion. A une extrémité opposée à l'extrémité solidaire de la seconde extrémité 5, la première partie 11 est couplée à une seconde partie 14 comportant une première portion droite 15 et une seconde portion droite 16 séparées par une portion courbe 17 ayant un rayon de courbure similaire à la portion courbe 13 de manière à orienter la seconde portion droite 16 orthogonalement à la première portion droite 15 et à la seconde extrémité 5, la première portion droite 15 de la première extrémité 4 et la seconde extrémité 5 s'étendant dans des plans parallèles.

La seconde portion droite 16 est également couplée à une partie terminale 18 de la première extrémité 4 recourbée en crochet. La partie terminale 18 comprend une portion 19 à grand rayon de courbure couplée à la seconde partie droite 16 via une portion courbe 20 configurée pour orienter la portion 19 à grand rayon de courbure en regard de la première portion droite 15. La partie terminale 18 comprend en outre une portion droite distale 21 orientée parallèlement à la seconde extrémité 5 et attachée à la portion à grand rayon de courbure 19 via une portion courbe 22.

La portion droite distale 21 de la partie terminale 18 est distante et en regard de la seconde extrémité 5 de manière à définir un passage 23 permettant au second élément 3 de la charnière 1 de s'insérer dans le premier élément 2.

Le second élément 3 comprend une bande dotée d'une première extrémité 30 droite destinée à être fixée à l'une des extrémités de la face d'une monture, et d'une seconde extrémité 31 en forme de spirale destinée à être assemblée avec le premier élément 2 de la charnière 1.

La seconde extrémité 31 en forme de spirale comprend trois portions droites 32, 33, 34 parallèles entre elles et s'étendant dans un plan parallèle au plan dans lequel s'étend la portion de bande de la première extrémité 30, et une portion droite 35 perpendiculaire aux plans définis par les premières portions droites 32 à 34.

Les trois portions droites parallèles 32 à 34 sont agencées de manière à former une première et une seconde portions droites périphériques 32 et 33 et une portion droite médiane 34 disposée entre les deux portions droites périphériques 32 et 33. La portion droite perpendiculaire 35 s'étend entre les deux portions droites périphériques 32 et 33 via deux portions courbes 36 et 37.

La première portion droite périphérique 32 s'étend entre la portion droite perpendiculaire 35 et la première extrémité 30 du second élément 3. La première portion droite périphérique 32 est couplée à la première extrémité 30 via deux portions courbes 38 et 39 à concavité opposée de manière à former un S et à définir un point d'inflexion.

La portion droite médiane 34 est couplée à la seconde portion droite périphérique 33 via une portion courbe 40 décrivant un demi-cercle.

Le second élément 3 comprend en outre un premier orifice 41 s'étendant de la première portion droite périphérique 32 jusqu'à une fraction de la portion droite perpendiculaire 35 via la partie courbe 36, et un second orifice 42 s'étendant de la partie courbe 40 décrivant le demi-cercle à une fraction de la seconde partie droite périphérique 33. Le premier orifice 41 s'étend sur toute la longueur de la première portion droite périphérique 32. Le second orifice 42 s'étend sur toute la portion courbe 40 décrivant un demi-cercle.

Les orifices 41 et 42 du second élément 3 sont réalisés par évidemment de la pièce sous la forme d'une fente rectangulaire avec une largeur, ou hauteur, inférieure à la largeur, ou hauteur, de la bande formant le second élément 3 mais supérieure à la largeur, ou hauteur, de la bande formant la première extrémité 4 recourbée du premier élément 2.

Le premier orifice 41 s'étend entre une première extrémité formant une première butée de pivot 44 dans la portion droite perpendiculaire 35 et une seconde extrémité formant une seconde butée de pivot 45 dans la première portion droite périphérique 32.

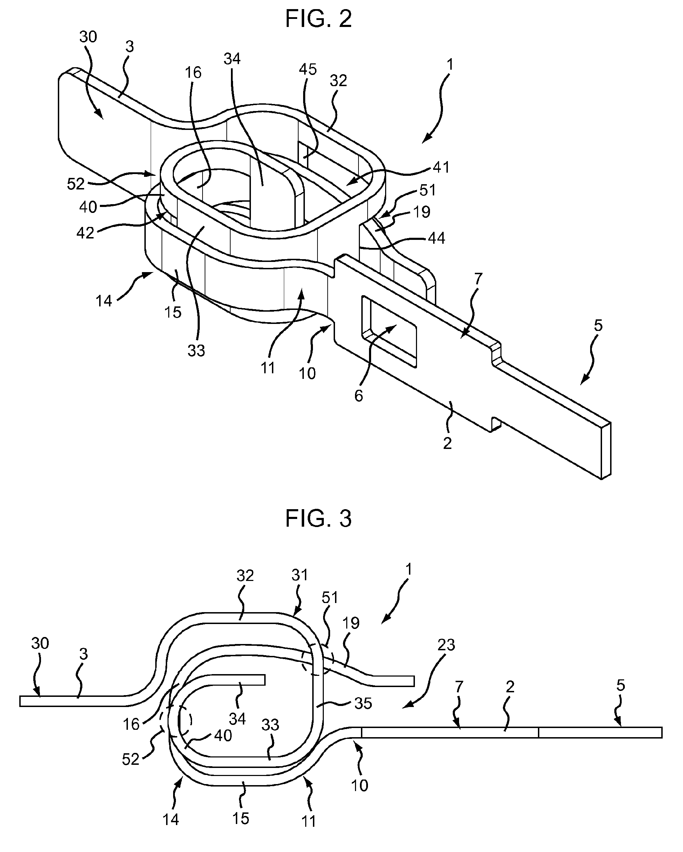

Sur les figures 2 et 3 sont illustrées respectivement une vue en perspective et une vue de dessus d'une charnière 1 assemblée, dans une première position.

La première position dans laquelle la charnière 1 est présentée sur les figures 2 et 3 correspond à une position dans laquelle la branche est déployée par rapport à la face de la monture de manière à pouvoir appliquer les lunettes sur le visage d'un utilisateur et faire reposer les branches sur ses oreilles.

Dans cette première position, le premier élément 2 est imbriqué dans le second élément 3 de manière à former la charnière 1. L'imbrication du premier élément 2 avec le second élément 3 génère deux croisements 51 et 52.

Le premier croisement 51 est formé par la portion 19 à grand rayon de courbure du premier élément 2 et la portion droite perpendiculaire 35 du second élément 3 au travers du premier orifice 41 du second élément 3. Le second croisement 52 est formé par la seconde portion droite 16 de la seconde partie 14 du premier élément 2 et la portion courbe 40 décrivant un demi-cercle du second élément 3 au travers du second orifice 42 du second élément 3.

Ces deux points de croisement 51 et 52 permettent de verrouiller la charnière 1 dans un plan vertical, c'est-à-dire dans un plan parallèle aux plans contenant les portions droites parallèle 32 à 34.

Dans une variante, en réduisant la longueur de la première portion droite 15 de la seconde partie 14 du premier élément 2, la seconde portion droite 16 de la seconde partie 14 du premier élément 2 peut former deux points de croisement au lieu d'un seul avec la portion courbe 40 décrivant un demi-cercle du second élément 3 au travers du second orifice 42 du second élément 3. Le point de croisement supplémentaire permet d'améliorer encore un peu plus la stabilité de la charnière 1 dans cette position.

Comme cela est illustré sur la figure 2, dans la première position, la portion 19 à grand rayon de courbure de la partie terminale 18 du premier élément 2 est en appui contre la première butée de pivot 44. La première butée de pivot 44 permet de verrouiller ainsi la charnière 1 dans la première position et d'empêcher que la charnière 1 ne pivote au-delà d'une position comprise entre la première position et la seconde position.

La première butée de pivot 44 est formée par l'extrémité du premier orifice 41 réalisée dans la portion droite perpendiculaire 35, c'est-à-dire l'extrémité du premier orifice 41 la plus proche du second orifice 42 lorsqu'on décrit la forme de la spirale de la seconde extrémité 31 du second élément 3.

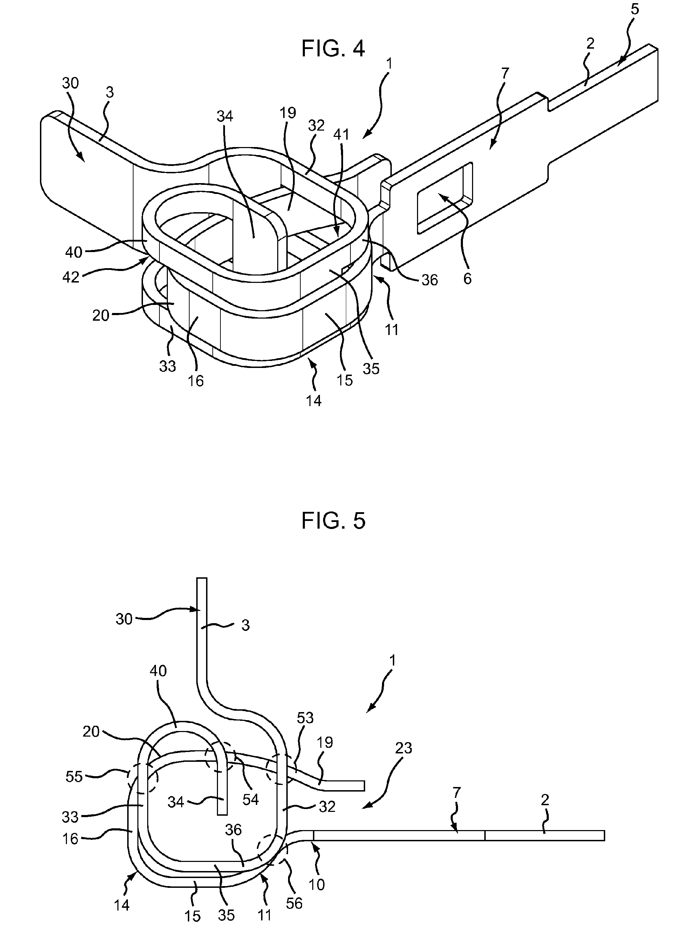

Sur les figures 4 et 5 sont illustrées respectivement une vue en perspective et une vue de dessus d'une charnière 1 assemblée, dans une seconde position.

La seconde position dans laquelle la charnière 1 est présentée sur les figures 4 et 5 correspond à une position dans laquelle la branche est repliée contre la face de la monture de manière à pouvoir réduire l'encombrement de la monture et ranger les lunettes dans un boîtier de taille réduite.

Dans cette seconde position, le premier élément 2 est imbriqué dans le second élément 3 de manière à former la charnière 1. L'imbrication du premier élément 2 avec le second élément 3 génère quatre croisements 53 à 56.

Le premier croisement 53 est formé par la portion 19 à grand rayon de courbure du premier élément 2 et la première portion droite périphérique 32 du second élément 3 au travers du premier orifice 41 du second élément 3. Le deuxième croisement 54 est formé par la portion 19 à grand rayon de courbure du premier élément 2 et la portion courbe 40 décrivant un demi-cercle du second élément 3 au travers du second orifice 42 du second élément 3. Le troisième croisement 55 est formé par la portion courbe 20 couplant la portion 19 à grand rayon de courbure et la seconde portion droite 16 de la seconde partie 14 du premier élément 2, et la portion courbe 40 décrivant un demi-cercle du second élément 3 au travers du second orifice 42 du second élément 3. Enfin, le quatrième croisement 56 est formé par la première partie 11 en forme de S du premier élément 2 et la portion courbe 36 couplant la portion droite perpendiculaire 35 à la première portion droite périphérique 32 du second élément 3 au travers du second orifice 42 du second élément 3.

Ces quatre points de croisement 53 à 56 permettent de verrouiller la charnière 1 dans un plan vertical, c'est-à-dire dans un plan parallèle aux plans contenant les portions droites parallèle 32 à 34.

Comme cela est illustré sur la figure 4, dans la seconde position, la portion à grand rayon de courbure 19 de la partie terminale 18 du premier élément 2 est en appui contre la seconde butée de pivot 45. La seconde butée de pivot 45 permet de verrouiller ainsi la charnière 1 dans la seconde position.

La seconde butée de pivot 45 est formée par l'extrémité du premier orifice 41 opposée à l'extrémité du premier orifice 41 formant la première butée de pivot 44, l'extrémité formant la seconde butée de pivot correspond à l'extrémité adjacente à la portion courbe 38, c'est-à-dire l'extrémité du premier orifice 41 la plus éloignée du second orifice 42 lorsqu'on décrit la forme de la spirale de la seconde extrémité 31 du second élément 3 et également la plus proche de la première extrémité 30 du second élément 3.

Comme cela apparaît sur les figures 2 et 4, la charnière 1 peut pivoter sur une plage angulaire restreinte entre les première et seconde positions, les première et seconde butées de pivot 44 et 45 constituant des moyens de verrouillage, conjointement avec la portion 19 à grand rayon de courbure du premier élément 2.

En outre, la première extrémité 4 recourbée du premier élément 2 et la seconde extrémité 31 en spirale du second élément 3 sont dimensionnées de manière à fournir un effet ressort à la charnière 1 lorsqu'elle est dans une position entre la première position et la seconde position 3.

La larguer maximale de la première extrémité 4 recourbée du premier élément 2 correspond à la largeur maximale de l'espace à l'intérieur de la première extrémité 4 recourbée. La largeur est mesurée dans une direction comprise dans le plan dans lequel s'étend le premier élément 2 entre ses deux extrémités 4 et 5 et orthogonale à la direction dans laquelle s'étend la seconde extrémité 5 du premier élément 2. La largeur maximale de la première extrémité 4 correspond donc à la distance entre la première portion droite 15 de la seconde partie 14 et la portion 19 à grand rayon de courbure de la partie terminale 18.

Dans le mode de réalisation illustré, la distance entre la première portion 15 de la seconde partie 14 et la portion 19 à grand rayon de courbure est strictement inférieure à la longueur du segment de droite le plus grand séparant l'extrémité du second orifice 42 la plus à l'intérieure de la spirale de la seconde extrémité 31 de la portion de spirale séparant les deux orifices 41 et 42. En d'autres termes, la distance entre la première portion 15 de la seconde partie 14 et la portion 19 à grand rayon de courbure est strictement inférieure à la distance maximale séparant la portion droite médiane 34 de la portion courbe 37 agencée entre la portion droite perpendiculaire 35 et la seconde portion droite périphérique 33.

La distance entre la première portion 15 de la seconde partie 14 et la portion 19 à grand rayon de courbure est également supérieure à la longueur du segment de droite séparant les deux extrémités du second orifice 42, c'est-à-dire la distance séparant la seconde portion droite périphérique 33 et la portion droite médiane 34.

Le dimensionnement de ces éléments permet ainsi de fournir l'effet ressort désiré.

L'invention fournit ainsi une charnière améliorée sans vis de pivot utilisable pour assembler une branche à une face d'une monture de lunettes permettant, d'une part, d'empêcher tout déplacement vertical, c'est-à-dire selon l'axe de rotation de la charnière, en utilisant seulement deux éléments, et d'autre part, de bloquer la charnière entre une première et une seconde position uniquement grâce à la charnière de sorte que la charnière ne pivote pas au-delà de ces deux positions.

## Revendications

1. Charnière (1) sans vis de pivot pour monture de lunettes comprenant un premier élément (2) destiné à être monté sur une branche d'une monture de lunettes et un second élément (3) destiné à être monté sur la face de ladite monture, le premier élément (2) étant imbriqué dans le second élément (3) de manière à former une charnière articulée entre une première position dans laquelle la branche de la monture est en position ouverte permettant le port des lunettes et une seconde position dans laquelle la branche est escamotée en position fermée contre la face de la monture, le second élément (3) comprenant deux orifices (41, 42) dans lesquels le premier élément (2) est inséré de manière à former au moins un point de croisement (51 à 56) dans chaque orifice (41, 42) dans la première position et dans la seconde position, **caractérisée en ce que** le second élément (3) comprend une bande dont une première extrémité (30) est destinée à être montée sur la face de la monture et une seconde extrémité (31) possède une forme de spirale, la seconde extrémité (31) de la bande comportant les deux orifices.

2. Charnière (1) selon la revendication 1, dans laquelle le premier élément (2) comprend une bande dont une extrémité (4) est recourbée de manière à délimiter une ouverture d'insertion (23) d'une portion du second élément (3).

3. Charnière (1) selon la revendication 2, dans lequel l'extrémité recourbée (4) du premier élément (2) et la seconde extrémité (31) en spirale du second élément (3) sont configurées pour fournir un effet ressort à la charnière (1) lorsque la charnière (1) est dans une position entre la première position et la seconde position de manière à ramener la charnière (1) dans la première position ou la seconde position.

4. Charnière (1) selon l'une des revendications 2 ou 3, dans lequel chaque orifice (41, 42) forme une fente dont l'épaisseur est supérieure à la largeur de la portion de la bande du premier élément (2) insérée dans les orifices (41, 42).

5. Charnière (1) selon l'une des revendications 1 à 4, dans laquelle les orifices (41, 42) sont dimensionnés pour permettre un pivotement du premier élément (2) par rapport au second élément (3) uniquement entre la première position et la seconde position.

6. Charnière (1) selon l'une des revendications 1 à 5, dans laquelle les premier et second éléments (2, 3) sont formés dans un même matériau métallique.

7. Charnière (1) selon l'une des revendications 1 à 6, dans laquelle le premier élément (2) comprend une seconde extrémité (5) comportant un orifice (6) pour fixer le premier élément (2) à ladite branche de la monture.

8. Charnière (1) selon l'une des revendications 1 à 7, dans laquelle le premier élément (2) est réalisé en une seule pièce avec une branche de la monture de lunettes destinée à comporter ladite charnière (1).

9. Charnière (1) selon l'une des revendications 1 à 8, dans laquelle le second élément (3) est réalisé en une seule pièce avec la face de la monture de lunettes destinée à comporter ladite charnière (1).

10. Monture pour une paire de lunettes comprenant au moins une charnière (1) sans vis de pivot selon l'une des revendications 1 à 9.
